# EUROPÄISCHE PATENTSCHRIFT

(11) **EP 2 946 039 B1**
(45) Veröffentlichungstag und Bekanntmachung des Hinweises auf die Patenterteilung: **18.10.2017**
(21) Anmeldenummer: 14706260.8
(22) Anmeldetag: 09.01.2014
(51) Int. Cl.: E02B 3/06, B63B 21/00

(54) **VORRICHTUNG ZUM FESTLEGEN VON SCHWIMMKÖRPERN**
DEVICE FOR SECURING FLOATING BODIES
DISPOSITIF PERMETTANT D'IMMOBILISER DES CORPS FLOTTANTS

(30) Priorität: 17.01.2013 AT 500282013
(43) Veröffentlichungstag der Anmeldung: 25.11.2015
(73) Patentinhaber: Dual Docker GmbH, 5222 Munderfing (AT)
(72) Erfinder: FUHRMANN, Michael, 5222 Munderfing (AT)
(74) Vertreter: Patentanwaltskanzlei Hübscher
(86) Internationale Anmeldenummer: PCT/AT2014/050005
(87) Internationale Veröffentlichungsnummer: WO 2014/110611

(56) Entgegenhaltungen:
- WO-A1-2009/015403
- WO-A2-2009/073897
- DE-A1- 1 801 694
- US-A- 5 107 784

## Beschreibung

### Technisches Gebiet

Die Erfindung betrifft eine Vorrichtung zum Festlegen von Schwimmkörpern, insbesondere Booten, mit einem Schwimmsteg mit wenigstens einem Auftriebskörper, mit einer Gangkonstruktion und mit einer fachwerkartigen Unterwasserkonstruktion.

### Stand der Technik

Ein derartiger Schwimmsteg mit Auftriebskörpern, mit einer Gangkonstruktion und mit einer fachwerkartigen Unterwasserkonstruktion ist beispielsweise aus der DE 1801694 A1 bekannt. Schwimmstege sind auf dem Wasser schwimmende Konstruktionen, an denen beispielsweise wiederum beliebige Schwimmkörper, wie Schiffe, Boote, Sportgeräte u. dgl. festgemacht werden können. Schwimmstege dienen in Gewässern mit Tidenhub als wasserstandsunabhängige Anlegestellen und in Häfen unter anderem auch zur Schaffung möglichst vieler Liegeplätze auf engem Raum. Die Auftriebskörper, üblicherweise sind mehrere vorgesehen, um bei einem Verlust eines oder einiger weniger Auftriebskörper nicht gleich den Verlust des gesamten Schwimmsteges in Kauf nehmen zu müssen, können aus beliebigem geeignetem Material gefertigt sein, wie beispielsweise aus Stahl, Aluminium, Beton oder Kunststoff.

Als Gehbelag für die Gangkonstruktion werden beispielsweise Holzbretter, Kunststoffbretter oder -platten, Gitterroste, Blechprofilen oder -platten vorgesehen. Bei Auftriebskörpern aus Beton oder Stahl kann der Auftriebskörper gleichzeitig den Gehbelag darstellen. Schwimmstege mit Auftriebskörpern aus Aluminium und Kunststoff weisen regelmäßig eine Unterkonstruktion für die Befestigung des Gehbelages auf. Unterkonstruktion und Gehbelag sind Teile der Gangkonstruktion, die üblicherweise wiederum direkt auf den, gegebenenfalls in eine fachwerkartige Unterwasserkonstruktion eingebetteten, Auftriebskörpern aufruhen. Derzeit werden Schwimmstege insbesondere zwischen Pfählen montiert, oder mit Zugmitteln, insbesondere mit Ketten oder Seilen, am Grund verankert und verspannt, was bei großen Tidenhüben aber problematisch ist. Ketten oder Seile stellen für die vorliegende Erfindung je nach Bedarf jederzeit gegenseitig austauschbare Zugmittel dar, und stehen als synonym für alle geeigneten Zugmittel die nur Zugkräfte übertragen können.

Das Festlegen von Schwimmkörpern aller Art, insbesondere von weiterführenden Stegen, Schiffen, Booten, Sportgeräten od. dgl. erfolgt üblicherweise durch ein Vertäuen des jeweiligen Schwimmkörpers am Schwimmsteg, wobei ein Schwimmkörper üblicherweise entweder längsseits oder quer zum Schwimmsteg anlegt. Nachteilig ist bei diesem Stand der Technik allerdings, dass der Schwimmsteg insbesondere bei widrigen Verhältnissen unruhig am Wasser liegt und nicht unerhebliche Eigenbewegungen beim Folgen der Wellenbewegungen ausführt, insbesondere diverse Biegungen und Verwindungen, was eine übermäßige Belastung für alle beteiligten Komponenten, wie Schwimmsteg, den anlegenden Schwimmkörpern und den Festmachermitteln, bedeutet.

Weiters ist es bekannt, Schwimmkörper mittels Haltebäumen an Stegen, Hafenmauern od. dgl. zu befestigen (WO 2009 015403 A1), wobei die Haltebäume insbesondere wenigstens einerends um eine zumindest annähernd vertikale Achse mit einem Beschlag drehfest bzw. drehfedernd am jeweiligen Festmacher festgelegt sind. Der Abstand vom Schwimmkörper zum Landungskörper wird mit den beiden Haltebäumen festgelegt, wobei eine Abtrift des Schwimmkörpers zur Seite und schräg nach hinten in Richtung Landungskörper durch ein drehfestes bzw. drehfederndes Festlegen der Beschläge an einem Ende der Haltebäume und/oder durch ein Abspannen der Haltebäume mit Springleinen unterbunden wird. Damit werden auf den Schwimmkörper einwirkende Wellen- und Windkräfte direkt über die Haltebäume in den Landungskörper eingeleitet. Damit können auf den Schwimmkörper einwirkende Kräfte, insbesondere bei höheren Windstärken und Wellengängen, bereits im Ansatz abgefedert und aufgefangen werden, womit eine wesentlich geringere Belastung von Schwimmkörper und Landungskörper gegeben ist.

### Darstellung der Erfindung

Der Erfindung liegt ausgehend von einem Stand der Technik der vorgeschilderten Art die Aufgabe zugrunde, eine Vorrichtung zum Festlegen von Schwimmkörpern zu schaffen, die bei möglichst einfachem Aufbau ausreichend robust ist und auch bei widrigen Verhältnissen, insbesondere bei Wind und Wellengang, noch verhältnismäßig ruhig am Wasser liegt. Nach einer Weiterbildung der Erfindung soll der Schwimmsteg besonders vorteilhaft, sicher und lagefest an einem Landungskörper festgelegt werden können.

Die Erfindung löst diese Aufgabe dadurch, dass die Gangkonstruktion und die fachwerkartige Unterwasserkonstruktion des Schwimmsteges miteinander über Pendelstützen verbunden und über Zugmittel, insbesondere Seile und/oder Ketten, abgespannt sind.

Mit der Erfindung wird eine Vorrichtung, insbesondere ein Schwimmsteg geschaffen, der auch bei widrigsten Verhältnissen hinsichtlich Wind- und Wellengang noch verhältnismäßig ruhig am Wasser liegt. Dies insbesondere dadurch, da die fachwerkartige Unterwasserkonstruktion mit Abstand unter der Gangkonstruktion angeordnet ist und so in beruhigteren Wassertiefen zu liegen kommt. Die Wellenamplituden und somit die auf die Unterwasserkonstruktion bzw. auf den Schwimmsteg einwirkenden Kräfte nehmen ja mit zunehmender Wassertiefe ab. Die in beruhigteren Gewässern liegende Unterwasserkonstruktion ist mit der der Wasseroberfläche zugeordneten Gangkonstruktion über Pendelstützen verbunden, die per se nur Zug- und Druckkräfte aufnehmen sollen und welche die fachwerkartige Unterwasserkonstruktion und die Gangkonstruktion in einem definierten Abstand zueinander halten. Zur Minderung und Dämpfung von Bewegungen in der Gangkonstruktion ist diese mit der Unterwasserkonstruktion über Zugmittel, insbesondere Seile, Ketten oder dgl., abgespannt. Unterwasserkonstruktion und Gangkonstruktion sind derart unter Vorspannung mit den Zugmitteln verbunden, dass zwar eine gewisse Ausgleichsbewegung des Schwimmsteges möglich ist, aber freie Bewegungen der beiden Konstruktionen, der Gangkonstruktion, der Unterwasserkonstruktion, zueinander im Ansatz aufgefangen bzw. unterbunden werden. Dies bedingt eine erhebliche Dämpfung von Bewegungen in der auf der Wasseroberfläche aufliegenden Gangkonstruktion, womit für den Schwimmsteg nahezu ähnlich Verhältnisse vorliegen wie für einen beispielsweise auf Pylonen verankerten feststehenden Steg, der aber keinen Tiedenhub ausgleichen kann. Ein erfindungsgemäß ausgebildeter Schwimmsteg liegt bei entsprechender Ausführung bei unruhigen Verhältnissen somit annähernd ruhig wie ein feststehender Steg.

Da aber nicht nur der Schwimmsteg selber vorteilhaft ausgebildet sein soll, er kann gegebenenfalls mit schweren Ankern, Ketten oder dgl. am Untergrund in seiner Lage festgelegt sein, sondern auch vorteilhaft an einem Landungskörper, insbesondere an einer an einer Hafenmole oder dgl. befestigt werden können soll, wird vorgeschlagen, dass der Schwimmsteg an einem Landungskörper mit wenigstens zwei je einerends am Schwimmsteg und anderends am Landungskörper angreifenden Haltebäumen festgelegt ist. Dabei empfiehlt es sich, wenn die, insbesondere mittels Beschlägen, an Festmacher festgelegten, Haltebäume aus zwei ineinander teleskopartig verschiebbaren Teilbäumen bestehen, die gegeneinander durch eine auf den Haltebaum einwirkende Zug- und Druckkräfte aufnehmende Federeinrichtung abgestützt sind. Ein derartig am Landungskörper befestigter Schwimmsteg hat den Vorteil, dass in den Landungskörper abzutragende Haltekräfte bereits im Ansatz spielfrei aufgefangen und abgefedert werden können, womit eine übermäßige Belastung der gesamten Vorrichtung, insbesondere der Verankerung der Haltebäume und des Schwimmstegs, vermieden werden kann. Sind die Haltebäume teleskopartig ausgebildet, was nicht zwingend vorgesehen werden muss, besteht die Möglichkeit Ausgleichsbewegungen im gewissen Maße kontrolliert über in den Haltebaum vorgesehene Federeinrichtungen und gegebenenfalls zusätzlich vorgesehene Dämpfeinrichtungen abzutragen und aufzunehmen. Die Haltebäume können dabei an beliebiger Stelle des Schwimmstegs angreifen.

Bei besonders großen zu befürchtende und abzutragenden Lasten empfiehlt es sich, die Haltebäume einerends an der, sich zum Landungskörper hin gegebenenfalls quer zum Steg verbreiterten, fachwerkartigen Unterwasserkonstruktion und anderends am Landungskörper angreifen zu lassen. Wie bereits erwähnt, führt die Unterwasserkonstruktion, wenn überhaupt, nur Bewegungen erheblich geringerer Amplitude aus, als dies ein an der Oberfläche frei schwimmender Schwimmkörper tun würde. Dies bedeutet aber auch, dass die über die Unterwasserkonstruktion in den Landungskörper, beispielsweise die Hafenmole, abzutragenden Kräfte geringer sind und extreme Lastspitzen somit vermieden werden können. Die fachwerkartige Unterwasserkonstruktion kann sich dabei zum Landungskörper hin verbreitern, was bedeutet, dass die Unterwasserhaltebäume mit einem größeren Abstand zueinander angeordnet werden können, womit wiederum die über die Haltebäume zu übertragenden Kräfte verringert werden, da der Abstand der Haltebäume zur Schwimmsteglängsachse vergrößert wird und etwaige auf den Steg einwirkende Querkräfte somit auch geringere Normalkräfte in den Haltebäumen bedingen.

Insbesondere empfiehlt es sich, wenn die fachwerkartige Unterwasserkonstruktion eine die Gangbreite überragende Breite aufweist. Damit lassen sich besonders stabile Schwimmstegsysteme schaffen, wobei bei entsprechend tief unter der Wasseroberfläche angeordneter Unterwasserkonstruktion ausreichend Freiraum für anliegende Schwimmkörper gegeben ist. Zudem sind Unterwasserkonstruktion und Gangkonstruktion somit vorteilhafter gegenseitig abspannbar.

Der Schwimmsteg, insbesondere die Unterwasserkonstruktion und der Landungskörper sind zudem üblicherweise mittels sich kreuzenden Zugmitteln, insbesondere Seilen und/oder Ketten, abgespannt. Diese Abspannzugmittel nehmen insbesondere auf den Schwimmsteg einwirkende Querkräfte auf und tragen diese in den Landungskörper ab.

Eine vorteilhafte, bei verhältnismäßig geringem Gewicht stabile Konstruktion für die Unterwasserkonstruktion ergibt sich, wenn diese aus einem Spantengerüst mit quer zur Steglängsrichtung ausgerichteten Querspanten und mit die Querspanten verbindenden Längsspanten besteht. Die einzelnen Spanten sind dabei beispielsweise mittels Zugmitteln gegeneinander abgespannt, um eine ausreichende Verwindungs- und Biegesteifigkeit der Unterwasserkonstruktion zu gewährleisten. Die Spanten- und Zugmittel bieten somit gleichermaßen Komponenten der fachwerkartigen Unterwasserkonstruktion. Die Querspanten können dabei beispielsweise ein Dreieck aufspannen, das über die Pendelstützen und die Seile mit der Gangkonstruktion verbunden bzw. abgespannt ist. Das Abspannen erfolgt dabei vorzugsweise dadurch, dass das Spantengerüst mit an Knotenpunkten des Spantengerüsts angreifenden Seilen in sich selbst und/oder mit der Gangkonstruktion abgespannt ist.

Üblicherweise wird der bzw. werden die Auftriebskörper der Gangkonstruktion zugeordnet sein. Um die Auftriebskräfte, aus den oben erwähnten Gründen, im Bereich der Wasseroberfläche zu reduzieren, kann wenigstens ein Teil der Auftriebskörper als Teil der fachwerkartigen Unterwasserkonstruktion ausgebildet sein. Beispielsweise könnten einzelne Spanten der Unterwasserkonstruktion wasserdicht verschlossene und mit Luft, Schaumstoff oder dgl. gefüllte Rohre sein.

### Kurze Beschreibung der Zeichnung

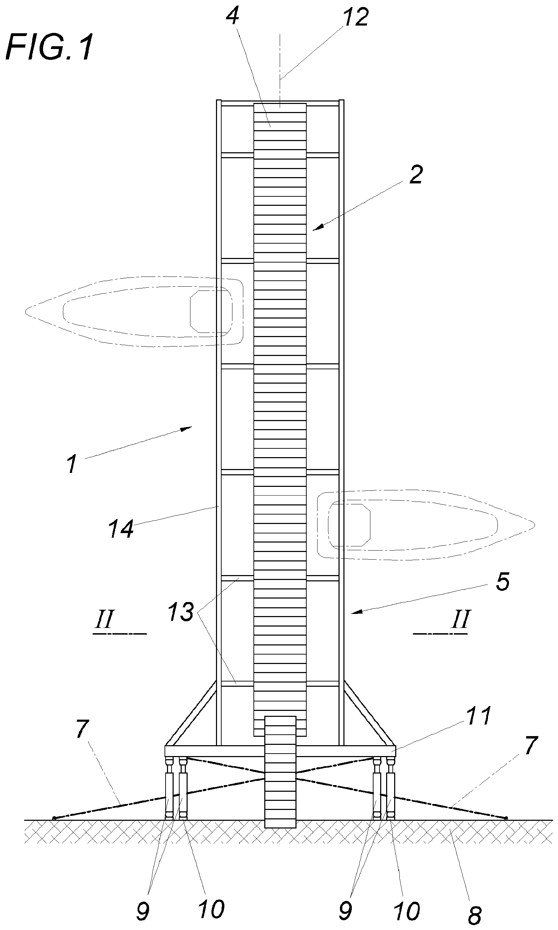

In der Zeichnung ist der Erfindungsgegenstand beispielsweise dargestellt. Es zeigen
- Fig. 1: eine erfindungsgemäße Vorrichtung in Draufsicht,

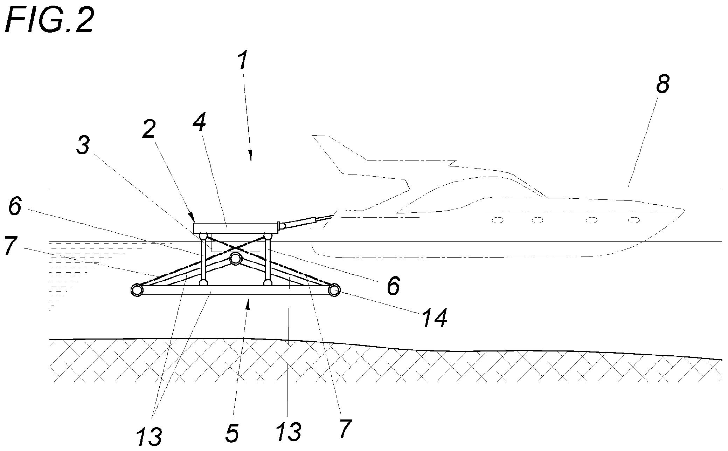

- Fig. 2: die Vorrichtung aus Fig. 1 im Schnitt nach der Linie II-II,

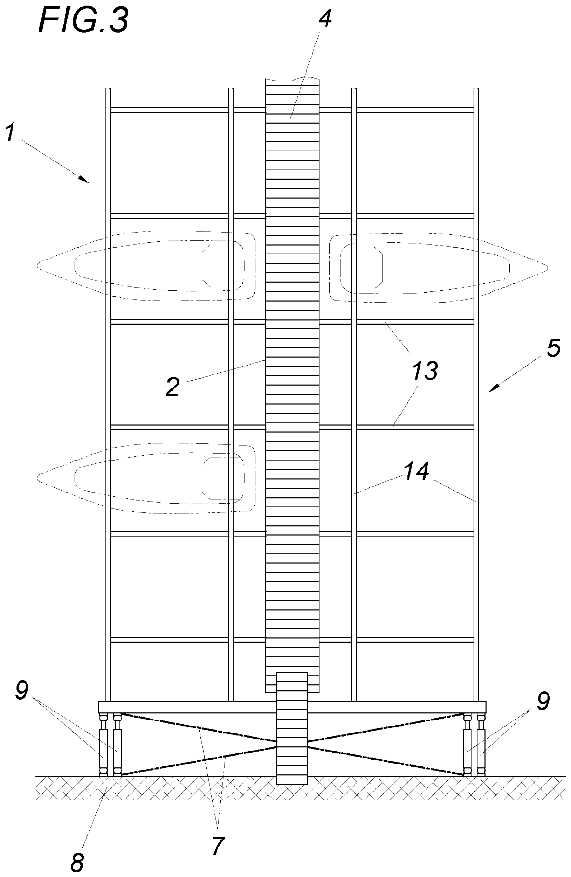

- Fig. 3: eine Konstruktionsvariante der erfindungsgemäßen Vorrichtung in Draufsicht und

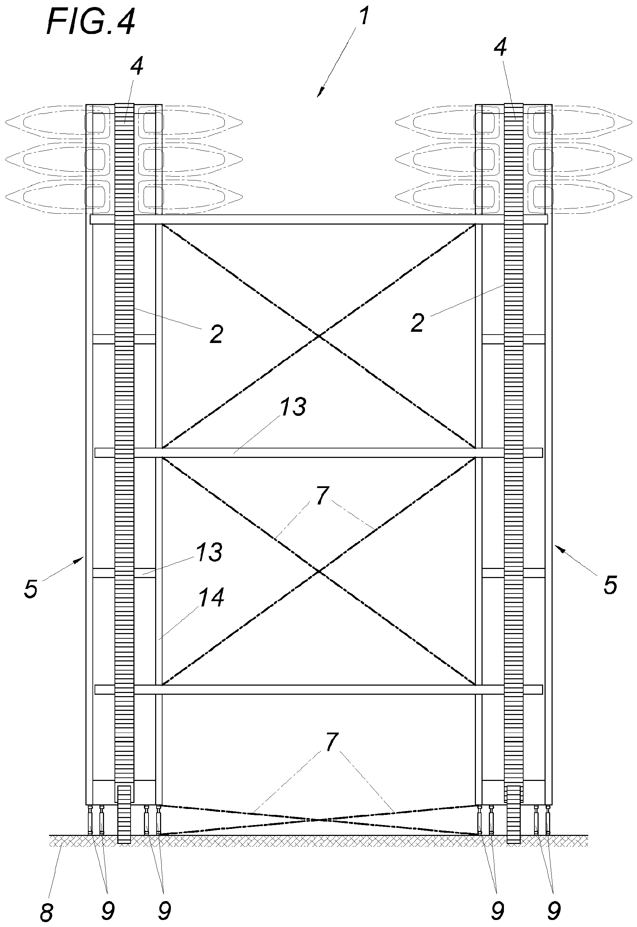

- Fig. 4: eine weitere Konstruktionsvariante in Draufsicht.

### Weg zur Ausführung der Erfindung

Die Erfindungsgemäße Vorrichtung zum Festlegen von Schwimmkörpern 1 umfasst einen Schwimmsteg 2 mit wenigstens einem Auftriebskörper 3, mit einer Gangkonstruktion 4 und mit einer fachwerkartigen Unterwasserkonstruktion 5.

Die Gangkonstruktion 4 weist einen üblichen Gehbelag aus Holzbrettern oder dgl. auf und ist mit der fachwerkartigen Unterwasserkonstruktion 5 des Schwimmstegs 2 über Pendelstützen 6 verbunden und über Zugmittel 7 abgespannt.

Der Schwimmsteg 2 ist an einem Landungskörper 8, einer Hafenmole, -mauer oder dgl, mit wenigstens zwei je einerends am Schwimmsteg 2 und anderends am Landungskörper 8 angreifenden Haltebäume 9 festgelegt. Die insbesondere mittels Beschlägen, besonders vorzugsweise Kugelkupplungen, an den Festmachern 10 festgemachten Haltebäume 9 bestehen aus zwei ineinander teleskopartig verschiebbaren Teilbäumen, die gegeneinander durch eine auf den Haltebaum 9 einwirkende Zug- und Druckkräfte aufnehmende Federeinrichtung abgestützt sind.

Die Haltebäume 9 greifen einerends an der sich zum Landungskörper hin quer zum Steg, also zur Schwimmsteglängsrichtung, verbreiterten, fachwerkartigen Unterwasserkonstruktion 5 und anderends am Landungskörper 8 an. Besagte Verbreiterung der Unterwasserkonstruktion 5 zum Landungskörper 8 hin ist mit einem Querbalken 11 angedeutet. Zudem kann den Figuren entnommen werden, dass die fachwerkartige Unterwasserkonstruktion 5 eine die Gangbreite, also die Breite der Gangkonstruktion überragende Breite aufweist.

Der Schwimmsteg 2, insbesondere die Unterwasserkonstruktion 5 und der Landungskörper 8 sind mittels sich kreuzender Zugmittel 7 abgespannt. Die Haltebäume 6 sind als Pendelstützen ausgebildet und insbesondere über Gelenke einerends am Schwimmsteg 2 und anderends am Landungskörper 8 angelenkt. Die fachwerkartige Unterwasserkonstruktion 5 besteht aus einem Spantengerüst mit quer zur Steglängsrichtung 12 ausgerichteten Querspanten 13 und mit die Querspanten 13 verbindenden Längsspanten 14. Insbesondere spannen die Querspanten 13 ein Dreieck auf, das über die Pendelstützen 6 und die Seile 7 mit der Gangkonstruktion 4 verbunden ist. Das Spantengerüst ist dabei mit an den Knotenpunkten des Spantengerüsts angreifenden Seilen 7 in sich selbst und mit der Gangkonstruktion 4 abgespannt. Beispielsweise können die Querspanten 13 aber insbesondere die Längsspanten 14 als Austrittskörper ausgebildet sein.

## Patentansprüche

1. Vorrichtung zum Festlegen von Schwimmkörpern (1), insbesondere Stegen und Booten, mit wenigstens einem Schwimmsteg (2) mit wenigstens einem Auftriebskörper (3), mit einer Gangkonstruktion (4) und mit einer fachwerkartigen Unterwasserkonstruktion (5), **dadurch gekennzeichnet, dass** die Gangkonstruktion (4) und die fachwerkartige Unterwasserkonstruktion (5) des Schwimmsteges (2) miteinander über Pendelstützen (6) verbunden und über Zugmittel (7), insbesondere Seile und/oder Ketten, abgespannt sind.

2. Vorrichtung nach Anspruch 1, **dadurch gekennzeichnet, dass** der Schwimmsteg (2) an einem Landungskörper (8) mit wenigstens zwei je einerends am Schwimmsteg (2) und anderends am Landungskörper (8) angreifenden Haltebäumen (9) festgelegt ist, wobei die, insbesondere mittels Beschlägen, an Festmacher (10) festgelegten Haltebäume (9) aus zwei ineinander teleskopartig verschiebbaren Teilbäumen bestehen, die gegeneinander durch eine auf den Haltebaum (9) einwirkende Zug- und Druckkräfte aufnehmende Federeinrichtung abgestützt sind.

3. Vorrichtung nach Anspruch 2, **dadurch gekennzeichnet, dass** die Haltebäume (9) einerends an der, sich zum Landungskörper hin gegebenenfalls quer zum Steg verbreiterten, fachwerkartigen Unterwasserkonstruktion (5) und anderends am Landungskörper (8) angreifen.

4. Vorrichtung nach einem der Ansprüche 1 bis 3, **dadurch gekennzeichnet, dass** die fachwerkartige Unterwasserkonstruktion (5) eine die Gangbreite überragende Breite aufweist.

5. Vorrichtung nach einem der Ansprüche 2 bis 4, **dadurch gekennzeichnet, dass** der Schwimmsteg (2), insbesondere die Unterwasserkonstruktion (5), und der Landungskörper (8) mittels sich kreuzenden Zugmitteln (7), insbesondere Seilen und/oder Ketten, abgespannt sind.

6. Vorrichtung nach einem der Ansprüche 2 bis 5, **dadurch gekennzeichnet, dass** die Haltebäume (9) als Pendelstützen ausgebildet und insbesondere über Kugelgelenke einerends am Schwimmsteg (2) und anderends am Landungskörper (8) angreifen.

7. Vorrichtung nach einem der Ansprüche 1 bis 6, **dadurch gekennzeichnet, dass** die fachwerkartigen Unterwasserkonstruktion (5) aus einem Spantengerüst mit quer zur Schwimmsteglängsrichtung (12) ausgerichteten Querspanten (13) und mit die Querspanten verbindenden Längsspanten (14) besteht.

8. Vorrichtung nach Anspruch 7, **dadurch gekennzeichnet, dass** die Querspanten (13) ein Dreieck aufspannen das über die Pendelstütze(n) (6) und die Seile (7) mit der Gangkonstruktion (4) verbunden ist.

9. Vorrichtung nach Anspruch 7 oder 8, **dadurch gekennzeichnet, dass** das Spantengerüst mit an Knotenpunkten des Spantengerüsts angreifenden Seilen (7) in sich selbst und/oder mit der Gangkonstruktion (4) abgespannt ist.

10. Vorrichtung nach einem der Ansprüche 1 bis 9, **dadurch gekennzeichnet, dass** zumindest Teile der fachwerkartigen Unterwasserkonstruktion als Auftriebskörper ausgebildet sind.

## Claims

1. Device for securing floating bodies (1), in particular docks and boats, having at least one floating dock (2) having at least one buoyancy body (3), having a path structure (4) and having a framework-shaped underwater structure (5), **characterised in that** the path structure (4) and the framework-shaped underwater structure (5) of the floating dock (2) are connected to one another via pendulum supports (6) and are braced via traction means (7), in particular cables and/or chains.

2. Device as claimed in claim 1, **characterised in that** the floating dock (2) is secured on a landing body (8) using at least two mooring arms (9) which each engage the floating dock (2) at one end and the landing body (8) at the other end, wherein the mooring arms (9) which are secured to mooring points (10), in particular by means of fixtures, consist of two sub-arms which are displaceable one inside the other telescopically and supported against one another by means of a spring unit which absorbs traction and compression forces acting upon the mooring arm (9).

3. Device as claimed in claim 2, **characterised in that** at one end the mooring arms (9) engage the framework-shaped underwater structure (5), which is optionally widened transversely to the dock towards the landing body, and at the other end engage the landing body (8).

4. Device as claimed in any one of claims 1 to 3, **characterised in that** the framework-shaped underwater structure (5) has a width which protrudes beyond the path width.

5. Device as claimed in any one of claims 2 to 4, **characterised in that** the floating dock (2), in particular the underwater structure (5), and the landing body (8) are braced by means of crossing traction means (7), in particular cables and/or chains.

6. Device as claimed in any one of claims 2 to 5, **characterised in that** the mooring arms (9) are designed as pendulum supports and engage the floating dock (2) at one end and the landing body (8) at the other end in particular by means of universal joints.

7. Device as claimed in any one of claims 1 to 6, **characterised in that** the framework-shaped underwater structure (5) consists of a rib framework having transverse ribs (13), which are oriented transversely to the floating dock longitudinal direction (12), and having longitudinal ribs (14) connecting the transverse ribs.

8. Device as claimed in claim 7, **characterised in that** the transverse ribs (13) span a triangle which is connected to the path structure (4) by means of the pendulum support(s) (6) and the cables (7).

9. Device as claimed in claim 7 or 8, **characterised in that** the rib framework is braced in itself and/or with the path structure (4) using cables (7) which engage node points of the rib framework.

10. Device as claimed in any one of claims 1 to 9, **characterised in that** at least parts of the framework-shaped underwater structure are designed as buoyancy bodies.

## Revendications

1. Dispositif permettant d'immobiliser des corps flottants (1), en particulier des embarcadères et des bateaux, avec au moins un ponton (2), avec au moins un corps de flottabilité (3), avec une structure de passage (4) et avec une structure subaquatique (5) en treillis, **caractérisé en ce que** la structure de passage (4) et la structure subaquatique (5) en treillis du ponton (2) sont reliées l'une à l'autre par l'intermédiaire d'appuis pendulaires (6) et haubanées par des moyens de traction (7), en particulier des câbles et/ou des chaînes.

2. Dispositif selon la revendication 1, **caractérisé en ce que** le ponton (2) est immobilisé au niveau d'un corps de débarquement (8), avec au moins deux bras d'amarrage (9) venant en prise respectivement, par une extrémité, au ponton (2) et par l'autre extrémité, au niveau du corps de débarquement (8), les bras d'amarrage (9) fixés à des amarres (10), en particulier au moyen de ferrures, étant composés de deux bras partiels mobiles de manière télescopique l'un dans l'autre, qui sont soutenus l'un contre l'autre par un dispositif ressort recevant des forces de traction et de pression agissant sur le bras d'amarrage (9).

3. Dispositif selon la revendication 2, **caractérisé en ce que** les bras d'amarrage (9) sont en prise par une extrémité au niveau de la structure subaquatique (5) en treillis s'étendant jusqu'au corps de débarquement, le cas échéant transversalement à l'embarcadère, et par l'autre extrémité, au niveau du corps de débarquement (8).

4. Dispositif selon l'une des revendications 1 à 3, **caractérisé en ce que** la structure subaquatique (5) en treillis présente une largeur supérieure à la largeur de passage.

5. Dispositif selon l'une des revendications 2 à 4, **caractérisé en ce que** le ponton (2), en particulier la structure subaquatique (5), et le corps de débarquement (8) sont haubanés au moyen de moyens de traction (7) en croix, en particulier de câbles et/ou de chaînes.

6. Dispositif selon l'une des revendications 2 à 5, **caractérisé en ce que** les bras d'amarrage (9) sont réalisés en tant qu'appuis pendulaires et en particulier, par des articulations à rotule, par une extrémité au niveau du ponton (2) et par l'autre extrémité, au niveau du corps de débarquement (8).

7. Dispositif selon l'une des revendications 1 à 6, **caractérisé en ce que** la structure subaquatique (5) en treillis est composée d'une armature de couples avec des membrures transversales (13) dirigées transversalement au sens longitudinal du ponton (12) et avec des membrures longitudinales (14) reliant les membrures transversales.

8. Dispositif selon la revendication 7, **caractérisé en ce que** les membrures transversales (13) établissent un triangle qui est relié par le biais d(es) appui(s) pendulaires(s) (6) et le câblage (7).

9. Dispositif selon la revendication 7 ou 8, **caractérisé en ce que** l'armature de couples est auto-haubanée et/ou avec la structure de passage (4), avec des câbles (7) en prise au niveau de noeuds de l'armature de couples.

10. Dispositif selon l'une des revendications 1 à 9, **caractérisé en ce qu'**au moins des parties de la structure subaquatique en treillis sont réalisées en tant que corps de flottabilité.
